# EUROPÄISCHE PATENTSCHRIFT

(11) **EP 0 736 137 B1**
(45) Veröffentlichungstag und Bekanntmachung des Hinweises auf die Patenterteilung: **26.08.1998**
(21) Anmeldenummer: 95902135.3
(22) Anmeldetag: 08.12.1994
(51) Int. Cl.: F02B 27/02

(54) **SAUGROHRANLAGE FÜR EINE MEHRZYLINDER-BRENNKRAFTMASCHINE**
INLET MANIFOLD ASSEMBLY FOR A MULTI-CYLINDER INTERNAL-COMBUSTION ENGINE
ENSEMBLE COLLECTEUR D'ADMISSION POUR MOTEUR A COMBUSTION INTERNE A PLUSIEURS CYLINDRES

(30) Priorität: 24.12.1993 DE 4344504
(43) Veröffentlichungstag der Anmeldung: 09.10.1996
(73) Patentinhaber: AUDI AG, 85045 Ingolstadt (DE)
(72) Erfinder: OHRNBERGER, Gerd, D-74861 Neudenau (DE); DILLIG, Helmut, D-74906 Bad Rappenau (DE)
(86) Internationale Anmeldenummer: EP9404081
(87) Internationale Veröffentlichungsnummer: WO9518295

(56) Entgegenhaltungen:
- EP-A- 0 177 794
- EP-A- 0 194 503
- EP-A- 0 355 960
- EP-A- 0 551 209
- WO-A-94/04803
- DE-A- 3 446 377
- DE-A- 3 807 193
- DE-A- 4 018 612
- DE-A- 4 040 598
- DE-A- 4 313 465
- PATENT ABSTRACTS OF JAPAN vol. 10, no. 171 (M-489) (2227) 17. Juni 1986 & JP,A,61 019 926 (HONDA) 28. Januar 1986

## Beschreibung

Die Erfindung betrifft eine Saugrohranlage für eine Mehrzylinder-Brennkraftmaschine entsprechend dem Oberbegriff des Patentanspruches 1.

Eine Saugrohranlage dieser Art ist aus der EP-A-0 551 209 bekannt. Dabei ist ein rohrförmiger Ansaugverteiler vorgesehen, von dem erste und zweite Einzelsaugrohre unterschiedlicher Längen zu den Zylindern der Brennkraftmaschine verlaufen. Die längeren, ersten Einzelsaugrohre sind um etwa 270° um den Ansaugverteiler herumgeführt, während die kürzeren zweiten Einzelsaugrohre teilweise parallel zu den ersten Einzelsaugrohren direkt zu den Zylindern verlegt sind. In dem rohrförmigen Ansaugverteiler ist eine Schaltwalze mit Durchbrüchen drehbar angeordnet, über die die ersten oder die zweiten Einzelsaugrohre mit dem Ansaugverteiler verbindbar sind.

Aufgabe der Erfindung ist es, eine Saugrohranlage der gattungsgemäßen Art zu schaffen, die sich durch einen einfacheren und kompakteren Aufbau und eine entsprechend kostengünstigere Herstellung auszeichnet.

Diese Aufgabe wird erfindungsgemäß durch die im Anspruch 1 angegebenen Merkmale gelöst.

Dadurch, daß der Ansaugverteiler und die Einzelsaugrohre von einem einstückigen Bauteil gebildet sind, wird die Fertigung vereinfacht und es werden Versätze, die beim Zusammenfügen von zwei Gußteilen aufgrund der Fertigungstoleranzen praktisch unvermeidlich sind, vermieden. Dadurch, daß alle Schwenkklappen durch eine einzige Schaltwalze ersetzt sind, wird die Fertigung erheblich verbilligt. Da diese Schaltwalze lediglich in die die zweiten Einzelsaugrohre schneidende Längsbohrung in dem Bauteil eingesetzt zu werden braucht, entfallen die aufwendigen Justierarbeiten, die bei den bekannten Schwenkklappen erforderlich sind.

Das den Ansaugverteiler und die ersten und zweiten Einzelsaugrohre umfassende Bauteil besteht vorzugsweise aus Kunststoff und im Hinblick auf niedrige Herstellungskosten bevorzugt aus einem Spritzgußteil. Da zu dessen Herstellung eine mehrteilige Form erforderlich ist, deren Trennfugen sich quer zur Längsrichtung der Längsbohrung erstreckt, kann ein Versatz der einzelnen Abschnitte der Längsbohrung zueinander nicht vollkommen ausgeschlossen werden. Nach Einschieben der Schaltwalze könnten dann zwischen deren Außenfläche und der Wand der Längsbohrung Spalte entstehen, die eine gegenseitige Beeinflussung des Ansaugvorganges benachbarten Einzelsaugrohre zur Folge haben könnte, was unerwünscht ist. Um dies zu vermeiden, kann die Längsbohrung mit einer eingepreßten Metallhülse ausgefüttert werden, die mit mit den zweiten Einzelsaugrohren fluchtende Durchbrüchen versehen ist. Dadurch kann die Schaltwalze mit einem sehr geringen radialen Spiel eingesetzt werden. Eine gegenseitige Beeinflussung der Ansaugvorgänge in benachbarten zweiten Einzelsaugrohren ist damit weitgehend vermieden. Zusätzlich zu oder anstelle einer derartigen eingepressten Hülse kann die Schaltwalze zwischen benachbarten Durchbrüchen jeweils eine Umfangsnut aufweisen, in die ein außenspannender Kolbenring eingesetzt ist, der an der Wand der Längsbohrung bzw. an der Wand der Hülse dichtend anliegt und benachbarte Durchbrüche wirksam gegeneinander abdichtet.

Zur Verringerung des Bauraumes ist es zweckmäßig, wenn der Ansaugverteiler rohrförmig ist und sich die ersten Einzelsaugrohre in einem Bogen über mehr als 270° um den Ansaugverteiler erstrecken und jedes zweite Einzelsaugrohr parallel zu dem zugehörigen ersten Einzelsaugrohr radial innerhalb über einen Teilbereich desselben verläuft und mit diesem eine gemeinsame Wand besitzt und nahe des zylinderseitigen Endes des ersten Einzelsaugrohres in dieses mündet. Die Längsbohrung ist dabei so angeordnet, daß sie die zweiten Einzelsaugrohre in der Mitte schneidet.

Diese Ausbildung ist besonders vorteilhaft für eine Brennkraftmaschine mit zwei Zylinderreihen in V-Anordnung, wobei die den Zylindern der ersten Zylinderreihe zugeordneten Einzelsaugrohre sich im Uhrzeigersinn und die den Zylindern der zweiten Zylinderreihe zugeordneten Einzelsaugrohre sich entgegen dem Uhrzeigersinn um den Ansaugverteiler erstrecken und in Längsrichtung des Ansaugverteilers jeweils ein erstes und zweites Einzelsaugrohr für einen Zylinder der ersten Zylinderreihe auf ein erstes und zweites Einzelsaugrohr für einen Zylinder der zweiten Zylinderreihe folgt. Hierbei können die zweiten Einzelsaugrohre für die Zylinder beider Zylinderreihen mit einer einzigen Schaltwalze gesteuert werden.

Ein Ausführungsbeispiel der Erfindung in Form einer Saugrohranlage für eine V-6-Brennkraftmaschine wird im folgenden unter Bezugnahme auf die Zeichnungen beschrieben. Es zeigt:
- Fig. 1: einen Längsschnitt der Saugrohranlage entlang Linie 1-1 in Fig. 2,
- Fig. 2: einen Querschnitt entlang Linie 2-2 in Fig. 1, und
- Fig. 3: eine Teilansicht der Schaltwalze mit Kolbenringen.

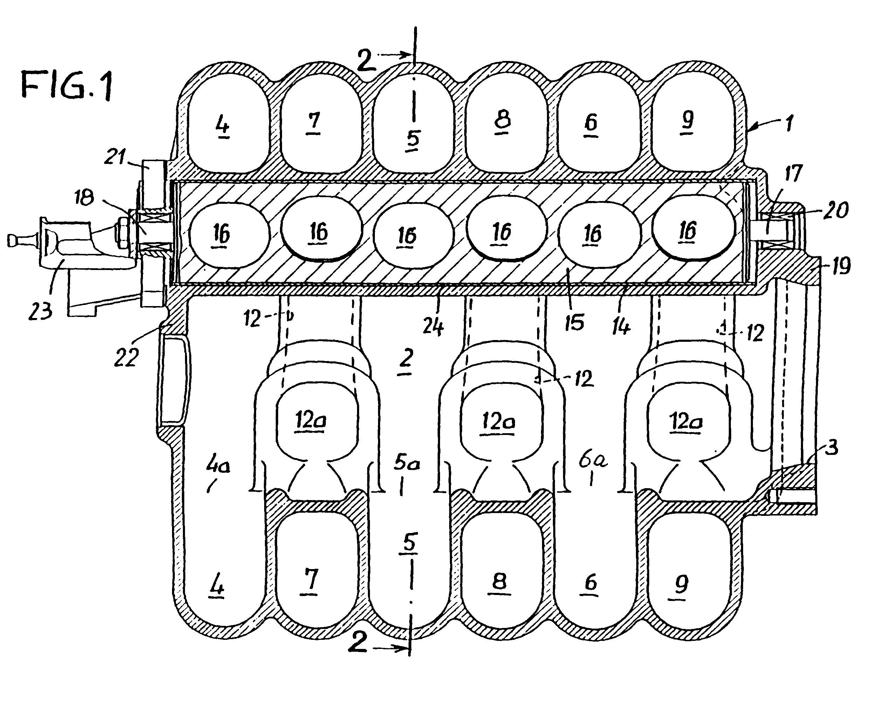

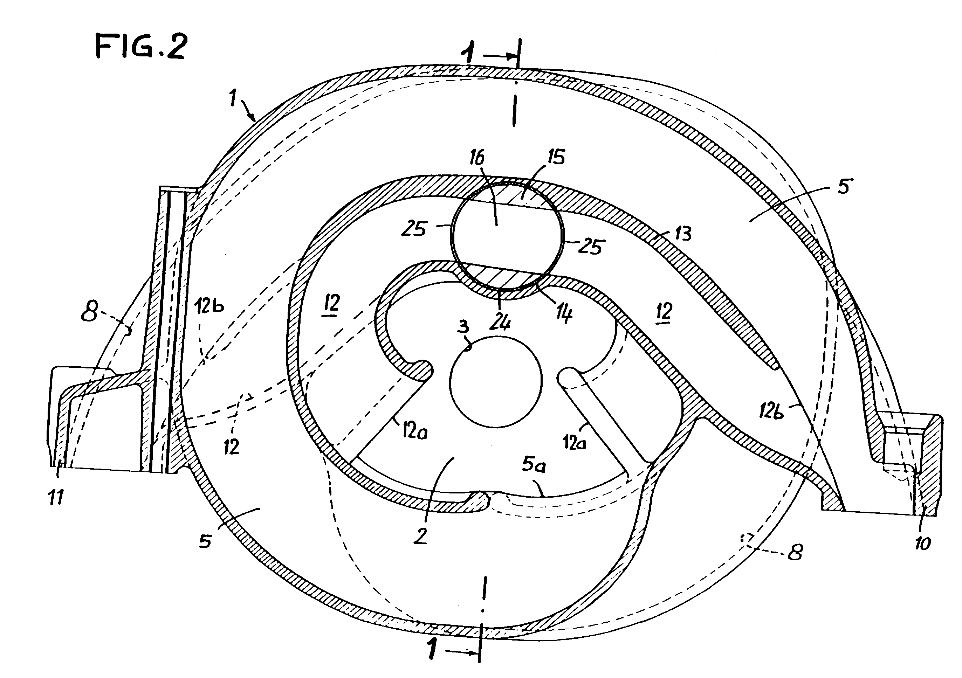

Die in den Zeichnungen dargestellte Saugrohranlage ist für eine V-6-Brennkraftmaschine zur Anordnung zwischen den Zylinderreihen bestimmt, die jeweils drei Zylinder enthalten. Sie weist ein einstückiges Kunststoff-Bauteil 1 auf, das einen zentralen, rohrförmigen Ansaugverteiler 2 enthält, der durch eine Öffnung 3 in der in Fig. 1 rechten Wand des Bauteils 1 mit einem nicht dargestellten Drosselklappenteil verbunden ist. Von dem Ansaugverteiler 2 gehen abwechselnd erste Einzelsaugrohre 4, 5 und 6 für die Zylinder der ersten Zylinderreihe und erste Einzelsaugrohre 7, 8 und 9 für die Zylinder der zweiten Zylinderreihe aus. Die ersten Einzelsaugrohre 4 bis 9 sind nebeneinander angeordnet und erstrecken sich, wie aus Fig. 2 ersichtlich, um den Ansaugverteiler 2 herum, wobei die ersten Einzelsaugrohre 4, 5 und 6 in Fig. 2 im Uhrzeigersinn und die ersten Einzelsaugrohre 7, 8 und 9 entgegen Uhrzeigersinn verlaufen. Die Eintrittsöffnungen der ersten Einzelsaugrohre 4 bis 6 sind mit 4a bis 6a bezeichnet. Die Eintrittsöffnungen der anderen ersten Einzelsaugrohre 7 bis 9 sind nicht sichtbar. Die ersten Einzelsaugrohre 4 bis 6 enden in einem Flansch 10, der an den Zylinderkopf der ersten Zylinderreihe angebracht wird, und die ersten Einzelsaugrohre 7, 8 und 9 enden in einem Flansch 11, der an den Zylinderkopf der anderen Zylinderreihe angeschraubt wird.

Radial innerhalb jedes ersten Einzelsaugrohres 4 bis 9 ist ein kurzes zweites Einzelsaugrohr 12 angeordnet, das ebenfalls von dem Ansaugverteiler 2 ausgeht und dessen Eintrittsöffnung mit 12a bezeichnet ist und das bei 12b in das zugehörige erste Einzelsaugrohr mündet, wie dies aus Fig. 2 ersichtlich ist. Die zweiten Einzelsaugrohre 12 verlaufen parallel zu den zugehörigen ersten Einzelsaugrohren und in gleicher Richtung wie diese und sie haben mit diesen eine gemeinsame Wand 13.

Das Bauteil 1 weist eine alle zweiten Einzelsaugrohre 12 schneidende Längsbohrung 14 auf, in der eine Schaltwalze 15 angeordnet ist, die für jedes zweite Einzelsaugrohr 12 einen Durchbruch 16 aufweist. Die Schaltwalze 15 ist an ihren beiden Enden mit Wellenstümpfen 17 bzw. 18 versehen, von denen der in Fig. 1 rechte Wellenstumpf 17 in der rechten Stirnwand 19 des Bauteils 1 über eine Nadelhülse 20 und der linken Wellenstumpf 18 in einem Flansch 21 gelagert ist, der an der linken Stirnwand 22 des Bauteils 1 angeschraubt ist. An dem linken Wellenstumpf 18 ist ein Hebel 23 angebracht, der mit einer nicht gezeigten Stelleinrichtung, beispielsweise einer Unterdruckdose, verbunden ist , mit der die Schaltwalze 15 um 90° zwischen der in Fig. 2 gezeigten, die zweiten Einzelsaugrohre 12 freigebenden ersten Stellung und einer diese absperrenden zweiten Stellung gedreht werden kann.

Um etwaige Versätze der Wand der Längsbohrung 14 bei der Herstellung des Kunststoff-Bauteils 1 in einer mehrteiligen Form auszugleichen, kann in die Bohrung 14 eine Metallhülse 24 eingepreßt werden, die mit den zweiten Einzelsaugrohren 12 fluchtende Durchbrüche 25 aufweist. Diese Hülse 24 kann gleichzeitig dazu dienen, die Reibung der Schaltwalze 15 zu verringern, wenn diese aus Kunststoff besteht.

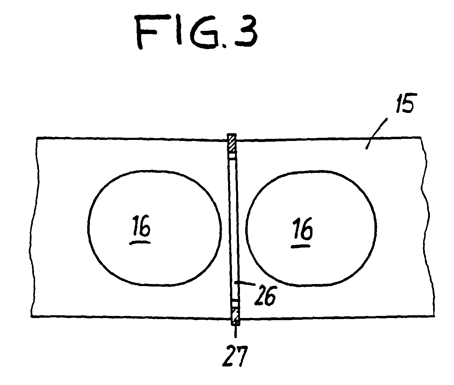

Mit der Hülse 24 können, wie erwähnt, Versätze der Wand der Längsbohrung 14 kompensiert werden, womit ein enges Laufspiel für die Schaltwalze 15 verwirklicht werden kann. Damit wird eine Verbindung zwischen benachbarten zweiten Einzelsaugrohren vermieden, die zu einer Störung der Ansaugvorgänge führen könnte. Zusätzlich zu oder anstelle der Hülse 15 kann, wie in Fig. 3 gezeigt, die Schaltwalze 15 jeweils zwischen zwei benachbarten Durchbrüchen 16 mit einer Umfangsnut 26 versehen sein, in welche ein außenspannender Kolbenring 27 eingesetzt ist, der dichtend an der Wand der Längsbohrung 14 bzw. an der Innenwand der Hülse 24 anliegt. Das Einsetzen der Schaltwalze mit den Kolbenringen kann mit Hilfe einer Montagehülse erfolgen, wie dies prinzipiell bei der Montage von mit Kolbenringen bestückten Kolben üblich ist. Diese Montagehülse wird zunächst mit der mit den Kolbenringen 27 bestückten Schaltwalze 15 in die Längsbohrung 14 eingeführt und dann herausgezogen. Sie kann gegebenenfalls in der Längsbohrung verbleiben und die Metallhülse 24 ersetzen.

Die Erfindung ist nicht auf eine Saugrohranlage für eine Brennkraftmaschine mit zwei V-förmig angeordneten Zylinderreihen beschränkt, sondern auch bei einer Saugrohranlage für eine Brennkraftmaschine mit nur einer Zylinderreihe anwendbar. In diesem Fall entfallen naturgemäß eine Gruppe von ersten Einzelsaugrohren 4, 5, 6 oder 7, 8, 9 und die zugehörigen zweiten Einzelsaugrohre.

## Patentansprüche

1. Saugrohranlage für eine Mehrzylinder-Brennkraftmaschine mit
- einem rohrförmigen Ansaugverteiler (2),
- nebeneinander angeordneten ersten Einzelsaugrohren (4-9), die von dem Ansaugverteiler (2) ausgehen und sich um den Ansaugverteiler (2) jeweils zu einem Zylinder erstrecken,
- kürzeren zweiten Einzelsaugrohren (12), die ebenfalls von dem Ansaugverteiler (2) ausgehen und sich jeweils zu einem Zylinder erstrecken, wobei sie radial innerhalb der ersten Einzelsaugrohre (4-9) und parallel zu diesen verlaufen und mit diesen eine gemeinsame Wand (13) besitzen, und
- einer Schaltwalze (15) mit Durchbrüchen (16) zum Absperren oder Freigeben der zweiten Einzelsaugrohre (12),
dadurch gekennzeichnet, daß
- die Schaltwalze (15) in einer nur die zweiten Einzelsaugrohre (12) schneidenden Längsbohrung (14) angeordnet ist und
- der Ansaugverteiler (2) und die ersten und zweiten Einzelsaugrohre (4-9 bzw. 12) von einem einstückigen Bauteil (1) gebildet sind.

2. Saugrohranlage nach Anspruch 1, dadurch gekennzeichnet, daß die Längsbohrung (14) die zweiten Einzelsaugrohre (12) etwa in der Mitte schneidet.

3. Saugrohranlage nach Anspruch 1 oder 2, dadurch gekennzeichnet, daß das Bauteil (1) aus Kunststoff besteht.

4. Saugrohranlage nach Anspruch 3, dadurch gekennzeichnet, daß die Längsbohrung (14) mit einer eingepreßten Metallhülse (24) ausgefüttert ist, die mit mit den zweiten Einzelsaugrohren (12) fluchtenden Durchbrüchen (25) versehen ist.

5. Saugrohranlage nach einem oder mehreren der Ansprüche 1 - 4, dadurch gekennzeichent, daß die Schaltwalze (15) zwischen benachbarten Durchbrüchen (16) jeweils eine Umfangsnut (26) aufweist, in die ein außen spannender Kolbenring (27) eingesetzt ist, der an der Wand der Längsbohrung (14) bzw. an der Innenwand der Hülse (24) dichtend anliegt.

6. Saugrohranlage nach Anspruch 1, dadurch gekennzeichnet, daß jedes zweite Einzelsaugrohr (12) nahe dem zylinderseitigen Ende jedes ersten Einzelsaugrohres (4-9) in dieses einmündet.

7. Saugrohranlage nach einem oder mehreren der Ansprüche 1 - 6, für eine Brennkraftmaschine mit zwei Zylinderreihen in V-Anordnung, dadurch gekennzeichnet, daß die den Zylinder der ersten Zylinderreihe zugeordneten Einzelsaugrohre sich im Urzeigersinn und die den Zylinder der zweiten Zylinderreihe zugeordneten Einzelsaugrohre sich entgegen dem Urzeigersinn um den Ansaugverteiler (2) erstrecken und in Längsrichtung des Ansaugverteilers jeweils ein erstes und zweites Einzelsaugrohre für einen Zylinder der ersten Zylinderreihe auf ein erstes und zweites Einzelsaugrohr für einen Zylinder der zweiten Zylinderreihe folgt, und daß die Längsbohrung (14) die zweiten Einzelsaugrohre (12) für die Zylinder beider Zylinderreihen schneidet.

## Claims

1. Inlet manifold assembly for a multi-cylinder internal-combustion engine, having
- a tubular intake distributor (2),
- first individual inlet manifolds (4-9) disposed alongside one another, which start from the intake distributor (2) and extend around the intake distributor (2) to one cylinder in each case,
- shorter second individual inlet manifolds (12) which likewise start from the intake distributor (2) and extend to one cylinder in each case, running radially inside the first individual inlet manifolds (4-9) and parallel thereto and having a common wall (13) therewith, and
- a controller barrel (15) incorporating passages (16) for shutting off or freeing the second individual inlet manifolds (12),
characterised in that
- the controller barrel (15) is disposed in a longitudinal bore (14) which intersects only the second individual inlet manifolds (12) and
- the intake distributor (2) and the first and second individual inlet manifolds (4-9 and 12, respectively) are constituted by a one-piece component (1).

2. Inlet manifold assembly according to claim 1, characterised in that the longitudinal bore (14) intersects the second individual inlet manifolds (12) roughly in the middle.

3. Inlet manifold assembly according to claim 1 or 2, characterised in that the component (1) is made of plastic.

4. Inlet manifold assembly according to claim 3, characterised in that the longitudinal bore (14) is lined with a pressed-in metal sleeve (24) which is provided with passages (25) which line up with the second individual inlet manifolds (12).

5. Inlet manifold assembly according to one or more of claims 1 to 4, characterised in that between neighbouring passages (16) the controller barrel (15) features a respective circumferential slot (26) into which is inserted an externally gripping piston ring (27) which bears sealingly against the wall of the longitudinal bore (14), or rather against the inside wall of the sleeve (24).

6. Inlet manifold assembly according to claim 1, characterised in that each second individual inlet manifold (12) opens out into each first individual inlet manifold (4-9), close to the cylinder-side end thereof.

7. Inlet manifold assembly according to one or more of claims 1 to 6, for an internal-combustion engine having two rows of cylinders in a V-shaped arrangement, characterised in that the individual inlet manifolds assigned to the cylinders of the first row of cylinders extend in a clockwise direction and the individual inlet manifolds assigned to the cylinders of the second row of cylinders extend in an anti-clockwise direction around the intake distributor (2) and in the longitudinal direction of the intake distributor a respective first and second individual inlet manifold for a cylinder of the first row of cylinders succeeds a first and second individual inlet manifold for a cylinder of the second row of cylinders, and that the longitudinal bore (14) intersects the second individual inlet manifolds (12) for the cylinders of both rows of cylinders.

## Revendications

1. Ensemble collecteur d'admission pour un moteur à combustion interne à plusieurs cylindres, comportant
- un distributeur d'admission tubulaire (2),
- des premiers tuyaux individuels d'admission (4 à 9) disposés l'un à côté de l'autre, qui partent du distributeur d'admission (2) et se déploient autour du distributeur d'admission (2), chacun jusqu'à un cylindre,
- des seconds tuyaux individuels d'admission (12) plus courts qui eux aussi partent du distributeur d'admission (2) et se déploient chacun jusqu'à un cylindre, ces seconds tuyaux individuels d'admission s'étendant radialement à l'intérieur des premiers tuyaux individuels d'admission (4 à 9) et parallèlement à ceux-ci et possédant avec eux une paroi commune (13), et
- un cylindre de commutation (15) comportant des perçages (16), pour obturer ou libérer les seconds tuyaux individuels d'admission (12),
caractérisé en ce que
- le cylindre de commutation (15) est disposé dans une forure longitudinale (14) qui ne coupe que les seconds tuyaux individuels d'admission (12) et
- le distributeur d'admission (2) et les premiers et seconds tuyaux individuels d'admission (4 à 9 et 12) sont formés par un élément de construction monobloc (1).

2. Ensemble collecteur d'admission selon la revendication 1, caractérisé en ce que la forure longitudinale (14) coupe les seconds tuyaux individuels d'admission (12) sensiblement au milieu.

3. Ensemble collecteur d'admission selon la revendication 1 ou 2, caractérisé en ce que l'élément de construction (1) est réalisé en matière plastique.

4. Ensemble collecteur d'admission selon la revendication 3, caractérisé en ce que la forure longitudinale (14) est garnie d'un manchon métallique (24) engagé à force, qui est pourvu de perçages (25) alignés avec les seconds tuyaux individuels d'admission (12).

5. Ensemble collecteur d'admission selon une ou plusieurs des revendications 1 à 4, caractérisé en ce que le cylindre de commutation (15) présente, chaque fois entre des perçages voisins (16), une gorge circonférentielle (26), dans laquelle est inséré un segment de piston (27) portant à l'extérieur, qui s'applique en formant étanchéité contre la paroi de la forure longitudinale (14) ou contre la paroi intérieure du manchon (24).

6. Ensemble collecteur d'admission selon la revendication 1, caractérisé en ce que chaque second tuyau individuel d'admission (12) débouche dans chaque premier tuyau individuel d'admission (4 à 9), à proximité de l'extrémité de ce dernier située du côté des cylindres.

7. Ensemble collecteur d'admission selon une ou plusieurs des revendications 1 à 6, pour un moteur à combustion interne comportant deux rangées de cylindres disposées en V, caractérisé en ce que les tuyaux individuels d'admission associés aux cylindres de la première rangée de cylindres se déploient dans le sens des aiguilles d'une montre et les tuyaux individuels d'admission associés aux cylindres de la seconde rangée de cylindres se déploient dans le sens inverse des aiguilles d'une montre, autour du distributeur d'admission (2), et un premier et un second tuyau individuels d'admission pour un cylindre respectif de la première rangée de cylindres font suite, dans la direction longitudinale du distributeur d'admission, à un premier et un second tuyau individuels d'admission pour un cylindre de la seconde rangée de cylindres, et en ce que la forure longitudinale (14) coupe les seconds tuyaux individuels d'admission (12) pour les cylindres des deux rangées de cylindres.
